# EUROPÄISCHE PATENTSCHRIFT

(11) **EP 1 488 093 B1**
(45) Veröffentlichungstag und Bekanntmachung des Hinweises auf die Patenterteilung: **08.11.2006**
(21) Anmeldenummer: 03722218.9
(22) Anmeldetag: 17.03.2003
(51) Int. Cl.: F02M 37/08, F04D 5/00

(54) **ANSCHLUSSSTÜCK FÜR EINE KRAFTSTOFFPUMPE**
CONNECTOR PIECE FOR A FUEL PUMP
RACCORD POUR POMPE A CARBURANT

(30) Priorität: 27.03.2002 DE 10213995
(43) Veröffentlichungstag der Anmeldung: 22.12.2004
(73) Patentinhaber: SIEMENS AKTIENGESELLSCHAFT, 80333 München (DE)
(72) Erfinder: SCHMIDT, Thomas, 36282 Hauneck (DE); RIES, Frank-William, 36251 Bad Hersfeld (DE); MÜHLHAUSEN, Ralf, 36199 Rotenburg (DE); BECKER, Dirk, 36179 Bebra (DE)
(86) Internationale Anmeldenummer: PCT/DE2003/000853
(87) Internationale Veröffentlichungsnummer: WO 2003/081016

(56) Entgegenhaltungen:
- EP-A- 0 582 949
- DE-A- 3 644 307
- DE-A- 19 722 132
- DE-U- 9 100 353
- US-A- 2 624 286
- US-A- 5 141 410
- US-A- 5 191 173
- US-A- 5 645 026

## Beschreibung

Die Erfindung betrifft ein Anschlussstück für eine Kraftstoffpumpe mit einer Aufnahme für einen Stecker mit elektrischen Kontakten zur Verbindung eines Elektromotors der Kraftstoffpumpe mit einem Stromnetz.

Solche Anschlussstücke werden bei Kraftstoffpumpen heutiger Kraftfahrzeuge zum Abschluss eines gemeinsamen Gehäuses des Elektromotors und einer Pumpenstufe eingesetzt und sind aus der Praxis bekannt. Zur Montage werden die elektrischen Kontakte durch die im Anschlussstück vorgesehene Dichtlippen geführt und gehalten. Damit wird ermöglicht, dass der von der Kraftstoffpumpe erzeugte Förderdruck von dem Anschlussstück gehalten und einem Anschlussstutzen einer Vorlaufleitung zugeführt wird. Nachteilig bei dem bekannten Anschlussstück ist, dass es aufwändig zu montieren ist. Zudem kann es bei der Montage der elektrischen Kontakte zu Beschädigungen des aus Kunststoff bestehenden Anschlussstückes kommen (US 5, 141, 410).

Es ist weiterhin eine von einem Elektromotor angetriebene Pumpe bekannt, deren elektrische Anschlussleitungen von dem Elektromotor zu einer Hülse geleitet werden und die im Anschluss an die Hülse nach außen geführt sind (US 2,624,286). Der Elektromotor, die Leitungen und die Hülse sind gekapselt und treten daher mit der zu fördernden Flüssigkeit nicht in Berührung.

Weiterhin ist aus der Praxis ein Anschlussstück bekannt geworden, bei dem der Stecker von dem Kunststoff des Anschlussstücks umspritzt ist. Dies erfordert ebenfalls eine sehr aufwändige Fertigung des Anschlussstücks.

Der Erfindung liegt das Problem zugrunde, ein Anschlussstück der eingangs genannten Art so zu gestalten, dass es besonders einfach zu fertigen und zu montieren ist.

Dieses Problem wird erfindungsgemäß dadurch gelöst, dass der Stecker und/oder das Anschlussstück in ihren/seinen aneinanderliegenden Bereichen aus einem mit Kraftstoff quellfähigen Material gefertigt sind/ist und dass im gequollenen Zustand Teilbereiche des Steckers und der Aufnahme unmittelbar dichtend aneinander liegen.

Durch diese Gestaltung erfordert das erfindungsgemäße Anschlussstück weder einen Dichtring zur Abdichtung des Stekkers noch eine Umspritzung des Steckers zu seiner Abdichtung gegenüber angrenzenden Bauteilen des erfindungsgemäßen Anschlussstücks. Das erfindungsgemäße Anschlussstück lässt sich daher besonders einfach fertigen, Beschädigungen im Bereich der Dichtflächen werden wirksam vermieden.

Zur weiteren Vereinfachung der Fertigung des erfindungsgemäßen Anschlussstücks trägt es bei, wenn der Stecker einen umlaufenden Rand aufweist und mit einer Übergangs- oder Presspassung in einer Ausnehmung der Aufnahme angeordnet ist.

Vor dem Quellen des Kunststoffs gestaltet sich die Vormontage des Steckers in der Aufnahme gemäß einer anderen vorteilhaften Weiterbildung der Erfindung besonders einfach, wenn die Aufnahme und der Stecker miteinander korrespondierende Rastmittel aufweisen. Die Rastmittel dienen damit als Montagehilfe für den Stecker.

Da im an der Kraftstoffpumpe montierten Zustand des erfindungsgemäßen Anschlussstücks der Druck des Kraftstoffs ausschließlich von einer Seite her auf den Stecker einwirkt, lässt sich eine zuverlässige Dichtheit des Steckers gegenüber der Aufnahme einfach sicherstellen, wenn Dichtflächen des Steckers und der Aufnahme im Wesentlichen plan oder trichterförmig gestaltet sind. Bei einer geeigneten Anordnung der Dichtflächen erhöht sich die Vorspannung des Steckers gegen die Aufnahme mit steigendem Druck innerhalb der Kraftstoffpumpe.

Das aus der Praxis bekannte Anschlussstück weist eine eingesetzte Lagerbuchse aus Metall zur Lagerung einer Welle des Elektromotors der Kraftstoffpumpe auf. Zur weiteren Vereinfachung der Montage des erfindungsgemäßen Anschlussstücks trägt es jedoch bei, wenn neben der Aufnahme eine als Lagerauge zur unmittelbaren Lagerung einer Welle des Elektromotors ausgebildete, topfförmige Ausnehmung angeordnet ist. Hierdurch ist es nicht mehr erforderlich, in das erfindungsgemäße Anschlussstück eine separat gefertigte Lagerbuchse einzusetzen und zu befestigen.

Eine Integration einer Vielzahl von Bauteilen in dem erfindungsgemäßen Anschlussstück lässt sich einfach erreichen, wenn neben der Aufnahme zwei Führungen für mit dem Stecker verbundene Bürsten des Elektromotors angeordnet sind.

Das erfindungsgemäße Anschlussstück lässt sich besonders kostengünstig aus Kunststoff im Spritzgussverfahren fertigen und aus der Spritzgussform einfach axial entformen, wenn die Aufnahme, die Führungen und die topfförmige Ausnehmung parallel zueinander angeordnet sind.

Eine Korrosion von Verbindungen von elektrischen Leitungen lässt sich gemäß einer anderen vorteilhaften Weiterbildung der Erfindung zuverlässig vermeiden, wenn der Stecker einen Kunststoffmantel hat und wenn der Kunststoffmantel Verbindungen der elektrischen Kontakte mit zu den Bürsten führenden Leitungen umschließt.

Eine elektrostatische Aufladung des erfindungsgemäßen Anschlussstücks lässt sich mit besonders geringem baulichen Aufwand vermeiden, wenn ein von dem Stecker abstehender Erdungsleiter bis zu einem unteren, zur Verbindung mit einem Gehäuse des Elektromotors vorgesehenen Rand des Anschlussstücks geführt ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch eine Kraftstoffpumpe mit einem erfindungsgemäßen Anschlussstück,
- Fig.2: das erfindungsgemäße Anschlussstück aus Figur 1 im Teilschnitt,
- Fig.3: eine stark vergrößerte Darstellung einer Einzelheit III des erfindungsgemäßen Anschlussstücks aus Figur 2.

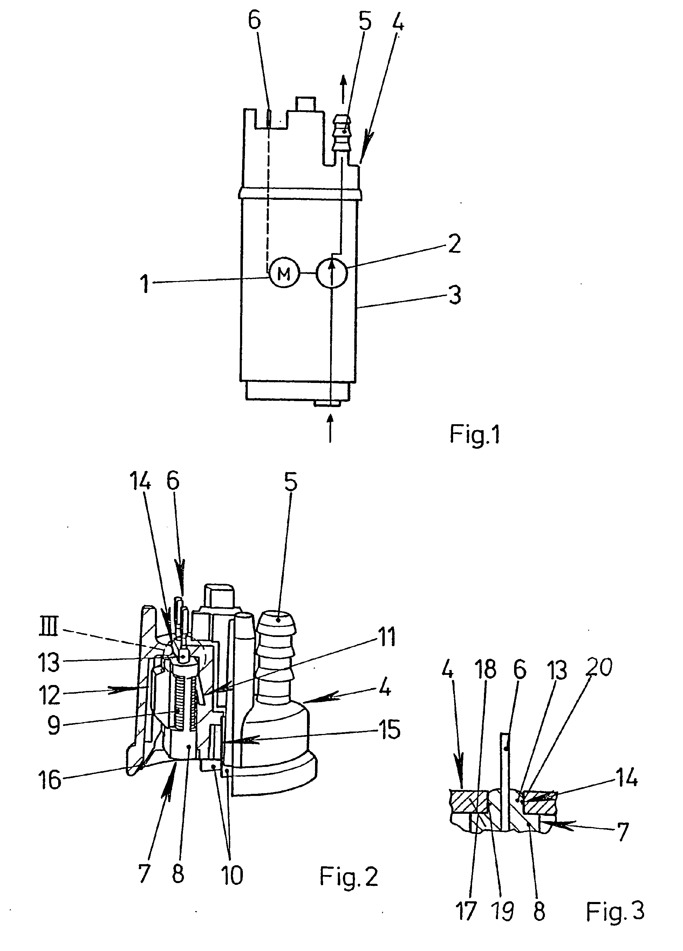

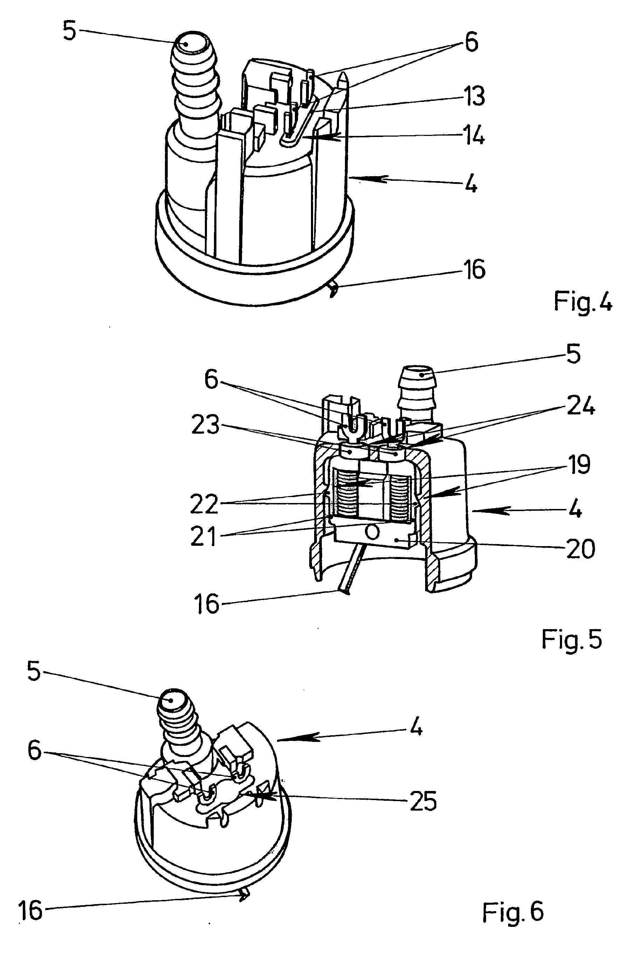

Figur 1 zeigt eine Kraftstoffpumpe mit einer von einem Elektromotor 1 angetriebenen Pumpenstufe 2 eines Kraftfahrzeuges und mit einem auf einem Gehäuse 3 befestigten Anschlussstück 4. Das Anschlussstück 4 hat einen Anschlussstutzen 5 für eine zu einer Brennkraftmaschine des Kraftfahrzeuges führenden Vorlaufleitung. Weiterhin weist das Anschlussstück 4 elektrische Kontakte 6 für den Elektromotor 1 der Kraftstoffpumpe auf.

Figur 2 zeigt das Anschlussstück 4 aus Figur 1 in einem vergrößerten Teilschnitt. Die elektrischen Kontakte 6 sind auf einem Stecker 7 angeordnet. Der Stecker 7 weist einen Kunststoffmantel 8 mit aus diesem herausragenden Drosselspulen 9 und zwei Bürsten 10 für einen Kollektor des Elektromotors 1 aus Figur 1 auf. Die Bürsten 10 sind in länglichen Führungen des Anschlussstücks 4 geführt und mittels eines Federelementes in Richtung des in Figur 1 dargestellten Elektromotors 1 vorgespannt. Der Stecker 7 ist von Rastmitteln 11 in einer Aufnahme 12 des Anschlussstücks 4 gehalten und durchdringt mit einem Rand 13 eine Ausnehmung 14 des Anschlussstücks 4. Weiterhin hat das Anschlussstück 4 in seinem Zentrum eine topfförmige Ausnehmung 15 zur unmittelbaren Lagerung einer Welle des Elektromotors 1. Ein Erdungsleiter 16 ist von dem Stecker 7 bis zu dem unteren Rand des Anschlussstücks 4 geführt.

Figur 3 zeigt stark vergrößert den Bereich des Randes 13 des Steckers 7 und die Ausnehmung 14 des Anschlussstücks 4. Hierbei ist zu erkennen, dass der Kunststoffmantel 8 des Steckers 7 unmittelbar mit dem Anschlussstück 4 in Kontakt steht. Der Rand 13 und die Ausnehmung 14 werden zudem von plan gestalteten Dichtflächen 17, 18, 19, 20 des Steckers 7 und des Anschlussstücks 4 umgeben. Bei einer Förderung von Kraftstoff durch die in Figur 1 dargestellte Kraftstoffpumpe entsteht innerhalb des Gehäuses 3 ein Überdruck, der auf den Stecker 7 einwirkt und die Dichtflächen 17, 18, 19, 20 gegeneinander vorspannt.

Der Rand 13 des Steckers 7 und das Anschlussstück 4 sind aus einem mit Kraftstoff quellfähigen Kunststoff gefertigt und weisen eine Übergangspassung oder Presspassung auf. Damit wird der Stecker 7 zur Montage in die Aufnahme 12 des Anschlussstücks 4 eingeführt, bis die Rastmittel 11 den Stecker 7 in seiner Lage halten. Dabei gelangt der Rand 13 des Steckers 7 in die Ausnehmung 14 des Anschlussstücks 4. Bei einem Kontakt mit Kraftstoff quellen der Rand 13 und die Ausnehmung 14 und dichten damit den Stecker 7 gegenüber dem Anschlussstück 4 ab.

## Patentansprüche

1. Anschlussstück (4) für eine Kraftstoffpumpe mit einer Aufnahme (12) für einen Stecker (7) mit elektrischen Kontakten (6) zur Verbindung eines Elektromotors (1) der Kraftstoffpumpe mit einem Stromnetz, **dadurch gekennzeichnet, dass** der Stecker (7) und/oder das Anschlussstück (4) in ihren/seinen aneinanderliegenden Bereichen aus einem mit Kraftstoff quellfähigen Material gefertigt sind/ist und dass Teilbereiche des Steckers (7) und der Aufnahme (12) unmittelbar dichtend aneinander liegen.

2. Anschlussstück nach Anspruch 1, **dadurch gekennzeichnet, dass** der Stecker (7) einen umlaufenden Rand (13) aufweist und mit einer Übergangs- oder Presspassung in einer Ausnehmung (14) der Aufnahme (12) angeordnet ist.

3. Anschlussstück nach Anspruch 1 oder 2, **dadurch gekennzeichnet, dass** die Aufnahme (12) und der Stecker (7) miteinander korrespondierende Rastmittel (11) aufweisen.

4. Anschlussstück nach zumindest einem der vorhergehenden Ansprüche, **dadurch gekennzeichnet, dass** Dichtflächen (17, 18, 19, 20) des Steckers (7) und der Aufnahme (12) im Wesentlichen plan oder trichterförmig gestaltet sind.

5. Anschlussstück nach zumindest einem der vorhergehenden Ansprüche, **dadurch gekennzeichnet, dass** neben der Aufnahme (12) eine als Lagerauge zur unmittelbaren Lagerung einer Welle des Elektromotors (1) ausgebildete, topfförmige Ausnehmung (15) angeordnet ist.

6. Anschlussstück nach zumindest einem der vorhergehenden Ansprüche, **dadurch gekennzeichnet, dass** neben der Aufnahme (12) zwei Führungen für mit dem Stecker (7) verbundene Bürsten (10) des Elektromotors (1) angeordnet sind.

7. Anschlussstück nach Ansprüche 5 und 6, **dadurch gekennzeichnet, dass** die Aufnahme (12), die Führungen und die topfförmige Ausnehmung (15) parallel zueinander angeordnet sind.

8. Anschlussstück nach Anspruch 6, **dadurch gekennzeichnet, dass** der Stecker (7) einen Kunststoffmantel (8) hat und dass der Kunststoffmantel (8) Verbindungen der elektrischen Kontakte (6) mit zu den Bürsten (10) führenden Leitungen umschließt.

9. Anschlussstück nach zumindest einem der vorhergehenden Ansprüche, **dadurch gekennzeichnet, dass** ein von dem Stecker (7) abstehender Erdungsleiter (16) bis zu einem unteren, zur Verbindung mit einem Gehäuse (3) des Elektromotors (1) vorgesehenen Rand des Anschlussstücks (4) geführt ist.

## Claims

1. Connecting piece (4) for a fuel pump having a receptacle (12) for a plug (7) with electric contacts (6) for connection of an electric motor (1) of the fuel pump to an electric network, **characterized in that** the plug (7) and/or the connecting piece (4) are/is manufactured in their/its adjacent regions from a material which is capable of swelling with fuel, and **in that** subregions of the plug (7) and of the receptacle (12) bear directly against one another in a sealing manner.

2. Connecting piece according to Claim 1, **characterized in that** the plug (7) has an encircling edge (13) and is arranged with a transition or press fit in a recess (14) of the receptacle (12).

3. Connecting piece according to Claim 1 or 2, **characterized in that** the receptacle (12) and the plug (7) have latching means corresponding with one another.

4. Connecting piece according to at least one of the preceding claims, **characterized in that** sealing surfaces (17, 18, 19, 20) of the plug (7) and of the receptacle (12) are designed to be substantially planar or funnel-shaped.

5. Connecting piece according to at least one of the preceding claims, **characterized in that** a cup-shaped recess (15) designed as a bearing lug for the direct mounting of a shaft of the electric motor (1) is arranged next to the receptacle (12).

6. Connecting piece according to at least one of the preceding claims, **characterized in that** two guides for brushes (10) of the electric motor (1), which brushes are connected to the plug (7), are arranged next to the receptacle (12).

7. Connecting piece according to Claims 5 and 6, **characterized in that** the receptacle (12), the guides and the cup-shaped recess (15) are arranged parallel to one another.

8. Connecting piece according to Claim 6, **characterized in that** the plug (7) has a plastic casing (8), and **in that** the plastic casing (8) surrounds connections of the electric contacts (6) to lines leading to the brushes (10).

9. Connecting piece according to at least one of the preceding claims, **characterized in that** an earth conductor (16) protruding from the plug (7) is guided as far as a lower edge of the connecting piece (4), which edge is provided for connection to a housing (3) of the electric motor (1).

## Revendications

1. Raccord (4) pour pompe à carburant comportant un logement (12) pour une prise (7) ayant des contacts électriques (6) destinée à raccorder un moteur électrique (1) de la pompe à carburant à un réseau électrique, **caractérisé par le fait que** la ou les parties de la fiche (7) et/ou du raccord (4) qui sont appliquées l'une contre l'autre est ou sont fabriquées à partir d'une matière apte à gonfler au contact du carburant et que des parties de la fiche (7) et du logement (12) sont appliquées directement l'une contre l'autre en assurant l'étanchéité.

2. Raccord selon la revendication 1, **caractérisé par le fait que** la fiche (7) a une bordure périphérique (13) et est mise en place dans un évidement (14) du logement (12) avec un ajustement de transition ou un ajustage serré.

3. Raccord selon la revendication 1 ou 2, **caractérisé par le fait que** le logement (12) et la fiche (7) comportent des moyens de fixation (11) qui se correspondent.

4. Raccord selon au moins l'une des revendications précédentes, **caractérisé par le fait que** des surfaces d'étanchéité (17, 18, 19, 20) de la fiche (7) et du logement (12) sont, pour l'essentiel, planes ou en forme d'entonnoir.

5. Raccord selon au moins l'une des revendications précédentes, **caractérisé par le fait qu'**un évidement (15) en forme de pot conçu comme oeil de palier pour la suspension directe d'un arbre du moteur électrique (1) est disposé à côté du logement (12).

6. Raccord selon au moins l'une des revendications précédentes, **caractérisé par le fait que** deux systèmes de guidage pour des balais (10) du moteur électrique (1) reliés à la fiche (7) sont disposés près du logement (12).

7. Raccord selon les revendications 5 et 6, **caractérisé par le fait que** le logement (12), les systèmes de guidage et l'évidement (15) en forme de pot sont disposés en parallèle l'un par rapport à l'autre.

8. Raccord selon la revendication 6, **caractérisé par le fait que** la fiche (7) a une gaine (8) en matière plastique et que la gaine (8) en matière plastique enveloppe des raccordements des contacts électriques (6) avec les conducteurs conduisant aux balais (10).

9. Raccord selon au moins l'une des revendications précédentes, **caractérisé par le fait qu'**un conducteur de terre (16) dépassant de la fiche (7) conduit à une bordure inférieure du raccord (4) prévue pour la liaison avec un boîtier (3) du moteur électrique (1).
